# NEUE EUROPÄISCHE PATENTSCHRIFT

(11) **EP 0 543 301 B2**
(45) Veröffentlichungstag und Bekanntmachung des Hinweises auf die Entscheidung über den Einspruch: **13.10.1999**
(45) Hinweis auf die Patenterteilung: 27.12.1995
(21) Anmeldenummer: 92119505.3
(22) Anmeldetag: 14.11.1992
(51) Int. Cl.: F02M 39/00, F02F 7/00

(54) **Brennkraftmaschine**
Internal combustion engine
Moteur à combustion interne

(30) Priorität: 21.11.1991 DE 4138290
(43) Veröffentlichungstag der Anmeldung: 26.05.1993
(73) Patentinhaber: DEUTZ Aktiengesellschaft, 51063 Köln (DE)
(72) Erfinder: Nolte, Albert, W-5000 Köln 30 (DE); Kleinschmidt, Toni, W-5040 Brühl (DE)

(56) Entgegenhaltungen:
- DE-A- 3 530 134
- DE-A- 3 910 794
- DE-A- 3 935 883
- DE-A- 3 945 883
- DE-A- 4 003 469
- DE-B- 1 079 888
- DE-C- 2 950 643
- DE-L- 10 670
- FR-A- 1 353 420
- GB-A- 2 198 793
- JP-A- 5 987 264
- US-A- 1 949 470
- PATENT ABSTRACTS OF JAPAN vol. 8, no. 197 (M-324)(1634) 11. September 1984 & JP-A-59 87 264

## Beschreibung

Die Erfindung betrifft eine Brennkraftmaschine gemäß dem Oberbegriff des Anspruchs 1.

Eine derartige Brennkraftmaschine ist durch den Lister Motor HW, 2 und 3 Zylinder beziehungsweise den Lister Motor Type SR4 bekannt. Dabei ist die Nockenwelle durch einen einzigen Zahneingriff von der Kurbelwelle angetrieben. Die Nockenwelle weist jedem Zylinder zugeordnete Lagerscheiben auf, zwischen denen für jeden Zylinder separate und beabstandete Nocken zur Betätigung der Gaswechselventile und des Einspritzpumpenelementes angeordnet sind.

Eine weitere Brennkraftmaschine ist aus der DE-A-39 10 794, bekannt. Diese Brennkraftmaschine weist ein Zylinderkurbelgehäuse auf. in dem eine Nockenwelle angeordnet ist, die über einen Rollenstößel den Plunger eines Einspritzpumpen. elementes betätigt. Dabei sind das Einspritzpum. penelement und der Rollenstößel direkt in das Kurbelgehäuse der Brennkraftmaschine eingesetzt. Dadurch kann auf ein separates Gehäuse für das Einspritzpumpenelement verzichtet werden. Ebenso fällt die sonst notwendige Befestigung des Pumpengehäuses an dem Kurbelgehäuse fort. Somit wird der Aufbau und die Montage des Einspritzpumpenelementes vereinfacht und eine Kostenersparnis erreicht. Zudem wird durch den Fortfall des Gehäuses für das Einspritzpumpenelement Platz für eine steife Einspritzpumpenelementkonstruktion mit den entsprechenden hydraulischen Vorteilengeschaffen.

Eine weitere aus der DE-B-1 079 888 bekannte Brennkraftmaschine weist ein Kurbelgehäuse mit einem darauf befestigten Maschinengehäuse auf. Es handelt sich dabei im Gegensatz zu einem Zylinderkurbelgehäuse um separate Bauteile. In das Maschinengehäuse sind Brennstoffeinspritzpumpen in Form von Einsteckpumpen eingesetzt. Dabei weist jede Einsteckpumpe zwei Förderelemente auf, die in ein Gehäuse eingesetzt sind. Dieses Gehäuse wiederrum ist mittig zwischen zwei benachbarten Zylindern auf das Maschinengehäuse aufgesetzt. Betrieben werden die Einsteckpumpen über je einen in einem Gehäuse gekapselten Stößelantrieb, der mit einer Nockenwelle zusammenwirkt. Dabei sind mehrere Nocken für verschiedene Einsteckpumpen nebeneinander angeordnet und der mittlere Nocken treibt zwei Stößelantriebe. Es handelt sich bei der Brennkraftmaschine um eine solche mit Vorkammern, wobei das Einspritzsystem dadurch bedingt ein Niederdruckeinspritzsystem ist.

Der Erfindung liegt die Aufgabe zugrunde, die bekannte Brennkraftmaschine weiter zu verbessern und die Einspritzvorrichtung in Richtung mechanischer und hydraulischer Steifheit weiter zu optimieren, wobei die Geräusch- und Abgasemission verringert werden soll.

Diese Aufgabe wird erfindungsgemäß dadurch gelöst, daß die Nocken den Bereich zwischen den Lagerscheiben lückenlos ausfüllen und eine durchgehende Einheit bilden.

Diese Ausbildung schafft in konseqenter Weiterentwicklung der gattungsbildenden Brennkraftmaschine eine Einspritzvorrichtung, die von dem Nockenwellenantrieb über die Anordnung und Ausrichtung im Zylinderkurbelgehäuse bis hin zu der kurzen Einspritzleitung insgesamt mechanische und hydraulisch sehr steif ausgebildet ist und die das Einspritzverhalten der erfindungsgemäße, Brennkraftmaschine gegenüber dem Stand der Technik verbessert. Ein genau definierbares und beeinflußbares Einspritzverhalten ist insbesondere hinsichtlich eines niedrigen Kraftstoffverbrauches und eines günstigen Emissionsverhaltens der Brennkraftmaschine von Bedeutung. Dabei werden sowohl die Abgasemissionen der Brennkraftmaschine als auch deren Geräuschemissionen, soweit sie von der Einspritzvorrichtung beeinflußt sind, verringert. Im einzelnen werden durch den Antrieb der Nockenwelle über einen einzigen Zahneingriff von der Kurbelwelle Verdrehungen der Nokkenwelle relativ zu der Kurbelwelle, die bei bekannten Nockenwellenantrieben über mehrere Zahnräder, Zahnriemen oder Ketten auftreten und die den erreichbaren Spitzendruck vermindern, vermieden.

Die Ausbildung der Nockenwelle mit den den Bereich zwischen den Lagerschieben ausfüllenden Nocken trägt zur mechanischen Steifheit des Gesamtsystems bei.

In Weiterbildung der Erfindung ist das Einspritzventil zu dem Einspritzpumpenelement geneigt in dem Zylinderkopf angeordnet. Dabei kann in weiterer Ausgestaltung das Einspritzventil aus der Zylinderachse zu dem Einspritzpumpenelement hin verschoben sein. Dadurch kann die Einspritzleitung zunehmend kürzer ausgeführt und der zuvor beschriebene Vorteile einer kurzen Einspritzleitung verstärkt erreicht werden.

In Weiterbildung der Erfindung weist das Zylinderkurbelgehäuse eine Buchse auf, in die das Einspritzpumpenelement eingesetzt ist und wobei das Einspritzpumpenelement mit einem Flansch an der Buchse anliegt. Diese Buchse, die kein Gehäuse für das Einspritzpumpenelement darstellt ist vorteilhaft aus einem hochwertigerem Material als das Zylinderkurbelgehäuse gefertigt. Die Buchse kann erfindungsgemäß sowohl für jedes Einspritzpumpenelement einer mehrzylindrigen Brennkraftmaschine separat gefertigt sein oder aber es können mehrere Buchsen durch zumindest entsprechende Verbindungsstege miteinander verbunden oder als Block ausgebildet sein. Einerseits wird durch den Einsatz der Buchse die Steifigkeit des Zylinderkurbelgehäuses weiter erhöht, da die Anlageflächen des steifen Einspritzpumpenelementes durch die Zwischenschaltung der Buchse gegenüber dem weicheren Zylinderkurbelgehäuse weiter vergrößert wird, zum weiteren werden mögliche Kavitationsprobleme bei der Absteuerung des Kraftstoffes in den Kraftstoff-Niederdruckraum des Zylinderkurbelgehäuses vermieden. Durch die Buchse wird außerdem Kraftstoffleckage verursacht durch Gußfehler im Grauguß des Zylinderkurbelgehäuses ausgeschlossen. Im übrigen ist es erfindungsgemäß auch vorgesehen, im Bereich des Rollenstößels eine weitere Buchse vorzusehen, die in gleicher Weise zu der beschriebenen Buchse des Einspritzpumpenelementes zu einer Versteifung des Gesamtsystems beiträgt. Ebenfalls ist vorgesehen, diese beiden Buchsen gegebenenfalls zumindest durch Stege miteinander zu verbinden.

In Weiterbildung der Erfindung ist das Einspritzpumpenelement als Rotationskörper ausgebildet und weist einen ringförmigen Flansch auf. Diese Ausbildung ermöglicht eine verzugsfreie Befestigung des Einspritzpumpenelementes im Zylinderkurbelgehäuse, wodurch Plungerfresser vermieden werden. Zudem wird durch den symmetrischen Aufbau eine gleichmäßige Härtung des Einspritzpumpenelementgrundkörpers ermöglicht und somit ebenfalls die Freßneigung des in dem Grundkörper bewegten Plungers verringert.

Das Zylinderkurbelgehäuse der Brennkraftmaschine ist in weiterer Ausgestaltung der Erfindung im Bereich des Einspritzpumpenelementes kastenförmig ausgebildet. Diese kastenförmige Ausbildung stellt einen weiteren Schritt zur Erhöhung der Steifigkeit des Gesamtsystems dar. Dabei ist in Weiterbildung dieser kastenförmige Aufbau durch die Wahl der Wandgestaltung und Wandausbildung insbesondere in der von dem Nocken der Nockenwelle hervorgerufenen Querbelastungsrichtung und Längsbelastungsrichtung besonders steif ausgebildet. Dabei ist zumindest ein oberer Balken des Kastens im Bereich des Einspritzpumpenelementes und ein unterer Balken des Kastens im Bereich des Rollenstößels angeordnet. Die Wandstärke dieser Balken ist jeweils so bemessen, daß sie zumindest im Bereich des Rollenstößels und des Einspritzpumpenelementes jeweils der halben Höhe des Rollenstößels beziehungsweise der halben Höhe des Einspritzpumpenelementes entspricht.

In Weiterbildung der Erfindung ist ein Nockenwellenantriebsradzahnsatz schwungradseitig der Brennkraftmaschine angeordnet. In diesem Endbereich der Kurbelwelle treten die geringsten Torsionsschwingungen auf, die sich auf die Nockenwelle fortpflanzen könnten. Dabei ist die Verzahnung des Nockenwellenantriebsradzahnsatzes als Hochverzahnung ausgebildet. Eine Hochverzahnung erhöht die Überdeckung der Zähne des Antriebsradsatzes, wodurch deren Geräuschentwicklung verringert wird.

Durch die Abdeckung des Einspritzventils mittels einer Haube wird dessen Geräuschabstrahlung vermindert. Durch eine Gummiabdichtung der Durchführung der Durchführung der Einspritzleitung unter die Haube wird der Körperschall der Einspritzleitung von der Haube ferngehalten und damit deren Geräuschemission minimiert.

Es ist von Vorteil, daß zwischen dem Nocken der Nockenwelle und einem Pumpenplunger des Einspritzpumpenelementes der Rollenstößel, ggfs. ein Federteller und eine Plungerstößelstange vorgesehen sind, deren Abmessungen so gewählt sind, daß der Flansch oberhalb des Zylinderkurbelgehäuses angeordnet ist. Da der Hochdruckraum des Einspritzpumpenelements und damit der obere Totpunkt des Pumpenplungers im Bereich des Flansches angeordnet sind, ist deren Nähe zum Hochdruckanschluß des Einspritzventils gewährleistet. Auf diese Weise wird der Abstand zwischen der Nockenwelle und dem Hochdruckanschluß des Einspritzventils überwiegend durch steife mechanische Elemente (Rollenstößel, Federteller, Plungerstößelstange, Pumpenplunger) und nur zum kleinen Teil durch weniger steife hydraulische Elemente (Einspritzleitung) überbrückt. Dadurch erhält das erfindungsgemäße Einspritzsystem eine für Hochdruckeinspritzung erforderliche hohe Gesamtsteifheit.

Ein Pumpenplunger und eine Plungerstößelstange, die einstückig ausgebildet sind, vereinfachen die Fertigung und Montage des Pumpenelementes.

Selbstverständlich kann die erfindungsgemäße Anordnung der Einspritzvorrichtung auch mit üblichen Steckpumpen realisiert werden. Hierbei ist das Einspritzpumpenelement in einem Pumpengehäuse angeordnet. Diese Pumpengehäuse können überwiegend im Zylinderkurbelgehäuse des Motors oder teils in und teils auf demselben angeordnet sein und eine außenliegende Kraftstoffversorgung aufweisen. Diese Anordnung bietet den Vorteil, daß der Hochdruckraum der Einspritzpumpenelemente besonders nahe an den Hochdruckanschluß des Einspritzventils reicht. Außerdem ist die Gefahr von Kraftstoffaufheizung und zylinderkurbelgehäuseinterner Kraftstoffleckage durch die außenliegende Kraftstoffversorgung vermieden.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:

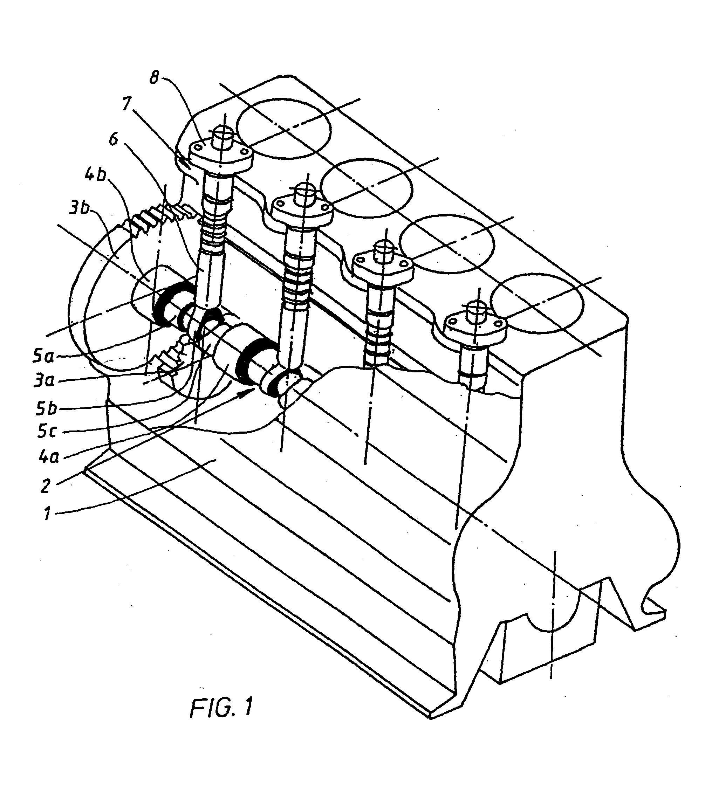

- Fig. 1:: eine Ansicht des Zylinderkurbelgehäuses der Brennkraftmaschine mit dem Nockenwellenantrieb,
- Fig.2:: einen Querschnitt durch das Zylinderkurbelwellengehäuse und den Zylinderkopf mit der Einspritzvorrichtung,
- Fig.3:: einen Querschnitt durch das Zylinderkurbelgehäuse im Bereich des Einspritzpumpenelementes,
- Fig.4:: eine Variante der Zylinderkurbelgehäuseausgestaltung im Bereich des Einspritzpumpenelementes und
- Fig.5:: einen Querschnitt durch das Zylinderkurbelgehäuse mit einer Buchse, in die das Einspritzpumpenelement eingesetzt ist.

Das Zylinderkurbelgehäuse 1 ist für eine vierzylindrige, wassergekühlte, selbstzündende Brennkraftmaschine ausgelegt. Eine nicht dargestellte Kurbelwelle treibt über einen einzigen Zahneingriff eine Nockenwelle 2 an. Dabei ist der Nockenwellenantriebsradsatz 3a, 3b auf der Schwungradseite der Brennkraftmaschine angeordnet. Der Nockenwellenantriebsradsatz 3a, 3b weist eine Hochverzahnung auf, die eine geräuscharme Übertragung der Drehbewegung gewährleistet. Die Nockenwelle 2 weist zwischen benachbarten Lagerscheiben 4a, 4b Nocken 5a, 5b, 5c auf, die den Bereich zwischen den Lagerscheiben 4a, 4b lückenlos ausfüllen und eine durchgehende Einheit bilden, die keine trennenden Einstiche aufweist. Die Nocken 5a, 5c betätigen über nicht dargestellte Stößelstangen die Gaswechselventile der Brennkraftmaschine, während der Nocken 5b über einen Rollenstößel 6 ein Einspritzpumpenelement 7 betätigt. Das Einspritzpumpenelement 7 ist mit einer Befestigungsvorrichtung 8 an dem Zylinderkurbelgehäuse 1 der Brennkraftmaschine befestigt. Jeder Zylinder der Brennkraftmaschine weist eine eigene Einspritzvorrichtung auf, die seitlich neben dem jeweiligen Zylinder angeordnet ist.

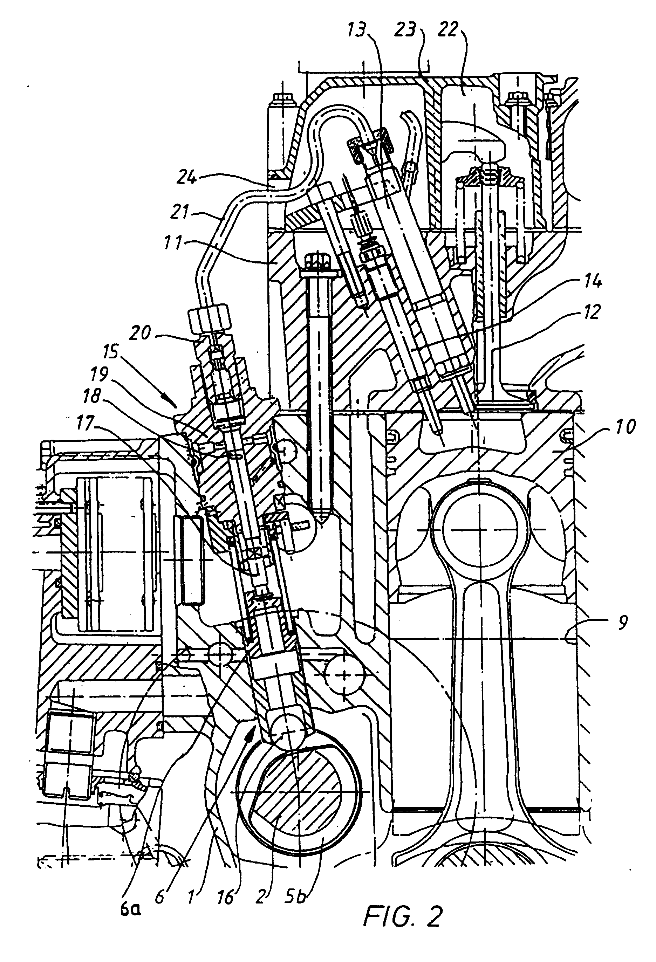

Der Querschnitt durch das Zylinderkurbelgehäuse 1 gemäß Fig.2 zeigt einen Zylinder 9, in dem ein Kolben 10 in den oberen Totpunkt bewegt ist. Das Zylinderkurbelgehäuse 1 ist von einem Zylinderkopf 11 abgedeckt, in dem Gaswechselventile 12, ein Einspritzventil 13 und ein Glühstift 14 angeordnet sind. Das Einspritzventil 13 ist aus der Zylinderachse zu einem Einspritzpumpenelement 15 hin verschoben und ebenfalls zu dem Einspritzpumpenelement 15 geneigt in dem Zylinderkopf 11 angeordnet.

Die Nockenwelle 2 ist seitlich des Zylinders 9 oberhalb der Kurbelwelle angeordnet. Auf dem Nocken 5b der Nockenwelle 2 rollt ein Rollenstößel 6 mit einer Rolle 16 ab, der eine Plungerstößelstange 17 betätigt. Die Plungerstößelstange 17 ist mit einem Pumpenplunger 18 in Wirkverbindung, bzw. als gemeinsames Bauteil ausgebildet. Der Pumpenplunger 18 ist in einer Plungerbüchse 19 geführt, wobei die Plungerbüchse 19 und der Pumpenplunger 18 die wesentlichen Bauteile des Einspritzpumpenelementes 15 bilden. Der Hochdruckauslaß 20 des Einspritzpumpenelementes 15 ist über eine Einspritzleitung 21 mit dem Einspritzventil 13 auf kürzestem Wege verbunden. Dabei wird ein Gaswechselventilraum 22 von einer Haube 23 öldicht abgedeckt, wobei die Haube 23 zusätzlich das Einspritzventil 13 und zumindest einen Teil der Einspritzleitung 21 abdeckt. Die Eintrittsstelle 24 der Einspritzleitung 21 in die Haube 23 ist schalldämmend abgedichtet. Wesentlich ist, daß der Hochdruckanschluß 20 des Einspritzpumpenelementes 15 möglichst nahe an dem Einspritzventil 13 angeordnet ist. Dazu ist das Einspritzpumpenelement 15 zusammen mit dem Rollenstößel 6 angenähert parallel zu der Zylinderachse ausgerichtet und das Einspritzpumpenelement 15 ist im Bereich der Trennfuge zwischen dem Zylinderkurbelgehäuse 1 und dem Zylinderkopf 11 angeordnet. Dabei wird die von dem Nocken 5b erzeugte Bewegung durch die Plungerstößelstange 17 auf den Pumpenplunger 18 über eine relativ weite Entfernung übertragen. Diese Bauteile können problemlos sehr steif ausgebildet werden, so daß von der Nockenwelle 2 zumindest bis zu dem Hochdruckauslaß 20 die Einspritzvorrichtung ausgesprochen steif ausgebildet ist.

Zur Übertragung der Nockenbewegung dient neben dem Rollenstößel 6 und der Plungerstößelstange 17 ein auf dem Rollenstößel 6 angeordneter Federteller 6a. Die relativ weite Entfernung zwischen der Nockenwelle 2 und dem Pumpenplunger 18 wird durch die Wahl entsprechender Abmessungen von Rollenstößel 6, Federteller 6a und Plungerstößelstange 17 überbrückt, wobei vorzugsweise die Plungerstößelstange 17 der Längenanspassung dient.

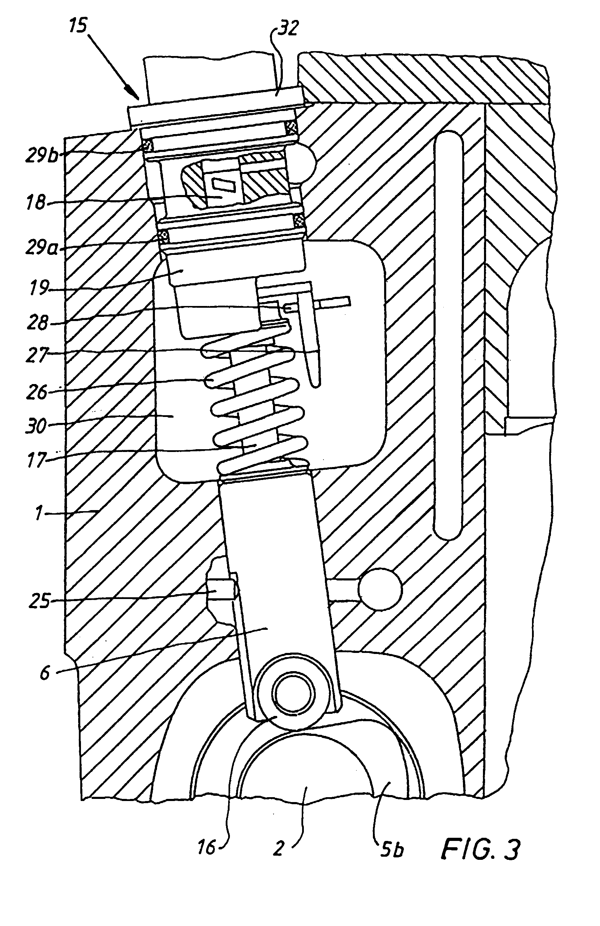

Fig. 3 zeigt den kastenförmigen Aufbau des Zylinderkurbelgehäuses 1 im Bereich des Einspritzpumpenelementes 15 und des Rollenstößels 6. Dabei ist im Bereich des Rollenstößels 6 ein unterer Balken angeordnet, und im Bereich des Einspritzpumpenelementes 15 ein oberer Balken angeordnet. Der Rollenstößel 6 ist im übrigen durch einen in dem unteren Balken angeordneten Stift 25 gegen Verdrehen gesichert. Weiterhin ist der Rollenstößel 6 über eine Feder 26 gegen das Einspritzpumpenelement 15 beziehungsweise die Plungerbüchse 19 abgestützt. Die Hubbewegung des Rollenstößels 6 wird auf den Pumpenplunger 18 über eine Plungerstößelstange 17 übertragen. An dem Pumpenplunger 18 ist eine Steuertahne 27 befestigt, die von einer Regelstange 28 verdreht werden kann. Damit wird die von dem Einspritzpumpenelement 15 geförderte Kraftstoffmenge variiert. Die Plungerbüchse 19 ist mittels Dichtungen 29a, 29b in das Zylinderkurbelgehäuse 1 der Brennkraftmaschine eingesetzt. Der Raum 30 ist zur Schmierung der darin bewegten Teile Ölbenetzt.

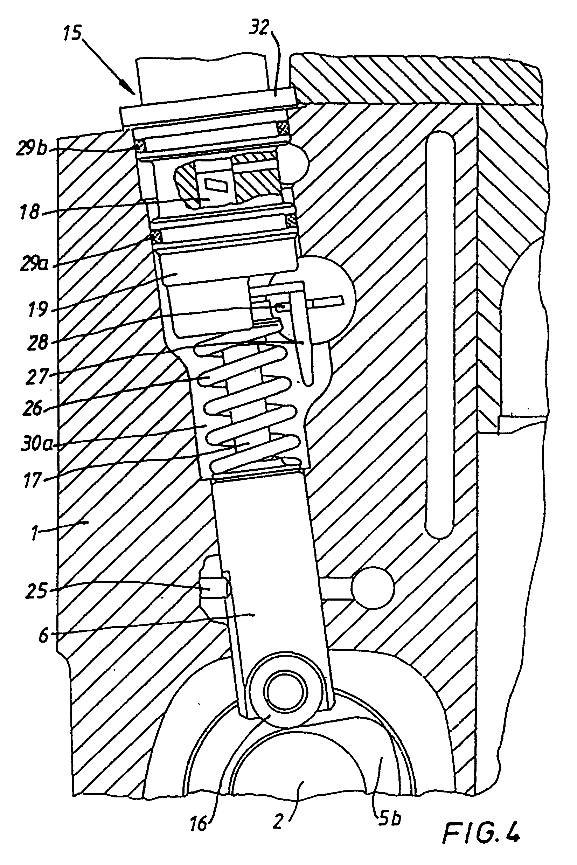

Im Unterschied zu dem Ausführungsbeispiel nach Fig.3 ist der Raum 30a gemäß Fig.4 soweit wie möglich verkleinert. Dadurch können die den unteren Balken und den oberen Balken verbindenden Seitenwände des Kastens stärker dimensioniert werden, so daß eine Erhöhung der Steifigkeit erzielt wird.

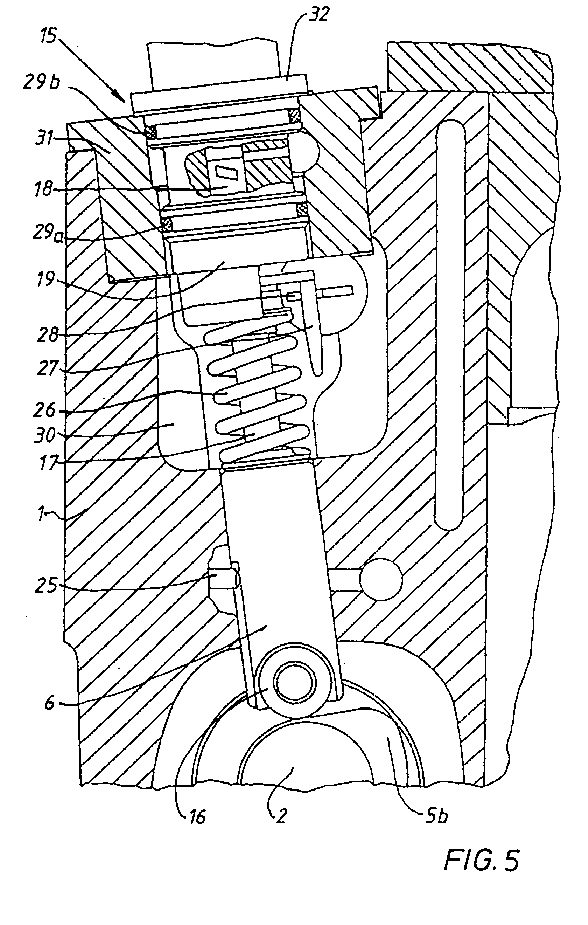

In dem Ausführungsbeispiel nach Fig.5 ist in das Zylinderkurbelgehäuse 1 eine Buchse 31 eingesetzt, in die das Einspritzpumpenelement 15 beziehungsweise die Plungerbüchse 19 eingesetzt ist. Dabei liegt die Plungerbüchse 19 des Einspritzpumpenelementes 15 mit einem Flansch 32, der ringförmig ausgebildet ist, an der Buchse 31 an.

## Patentansprüche

1. Brennkraftmaschine mit einem Zylinderkurbelgehäuse (1), in dem eine Kurbelwelle drehbar gelagert ist, an der zumindest ein Pleuel angelenkt ist, das mit einem Kolben (10) verbunden ist, der in einem von einem Zylinderkopf (11) abgedeckten Zylinder (9) bewegbar ist, wobei weiterhin eine Nockenwelle (2) sowie eine Einspritzvorrichtung mit zumindest einem Einspritzpumpenelement (7, 15), einem Einspritzventil (13) und einer das Einspritzpumpenelement (7, 15) und das Einspritzventil (13) verbindenden Einspritzleitung (21) vorgesehen sind, wobei die Nockenwelle (2) Nocken (5a, 5b, 5c) zur Betätigung des jedem Zylinder (9) separat zugeordneten Einspritzpumpenelementes (7, 15) aufweist, wobei das Einspritzpumpenelement (7, 15) seitlich neben dem jeweiligen Zylinder (9) in das Zylinderkurbelgehäuse (1) eingesetzt und zu dem zugeordneten Zylinderkopf (11) ausgerichtet ist und antriebsseitig mit einem Rollenstößel (6) auf der Nockenwelle (2) abrollt und hochdruckseitig aus dem Zylinderkurbelgehäuse (1) hinausragt, wobei der Hochdruckauslaß (20) des Einspritzpumpenelementes (7, 15) über eine kurze Einspritzleitung (21) zur Minimierung des schädlichen Volumens mit dem Einspritzventil (13) verbunden ist,
wobei die Nockenwelle (2) über einen einzigen Zahneingriff von der Kurbelwelle angetrieben ist, die Nokkenwelle (2) jedem Zylinder zugeordnete Lagerscheiben (4a, 4b) aufweist, zwischen denen für jeden Zylinder separate Nocken (5a, 5b, 5c) zur Betätigung der Gaswechselventile und des Einspritzpumpenelementes (7, 15) angeordnet sind, dadurch gekennzeichnet daß die Nocken (5a, 5b, 5c) den Bereich zwischen den Lagerscheiben (4a, 4b) lückenlos ausfüllen und eine duchgehende Einheit bilden.

2. Brennkraftmaschine nach Anspruch 1,
dadurch gekennzeichnet, daß das Einspritzventil (13) zu dem Einspritzpumpenelement (7, 15) geneigt in dem Zylinderkopf (11) angeordnet ist.

3. Brennkraftmaschine nach einem der vorherigen Ansprüche,
dadurch gekennzeichnet, daß das Einspritzventil (13) aus der Zylinderachse zu dem Einspritzpumpenelement (7, 15) hin verschoben ist.

4. Brennkraftmaschine nach einem der vorherigen Ansprüche,
dadurch gekennzeichnet, daß das Zylinderkurbelgehäuse (1) eine Buchse (31) aufweist, in die das Einspritzpumpenelement (7, 15) eingesetzt ist, das mit einem Flansch (32) an der Buchse (31) anliegt.

5. Brennkraftmaschine nach einem der vorherigen Ansprüche,
dadurch gekennzeichnet, daß das Einspritzpumpenelement (7, 15) als Rotationskörper ausgebildet ist und einen ringförmigen Flansch (32) aufweist.

6. Brennkraftmaschine nach einem der vorherigen Ansprüche,
dadurch gekennzeichnet, daß das Zylinderkurbelgehäuse (1) im Bereich des Einspritzpumpenelementes (7, 15) kastenförmig ausgebildet ist.

7. Brennkraftmaschine nach einem der vorherigen Ansprüche,
dadurch gekennzeichnet, daß das Zylinderkurbelgehäuse (1) im Bereich des Einspritzpumpenelementes (7, 15) und des Rollenstößels (6) durch die Wahl der Wandgestaltung und Wandausbildung steif ausgebildet ist.

8. Brennkraftmaschine nach Anspruch 6,
dadurch gekennzeichnet, daß ein oberer und ein unterer Balken des Kastens im Bereich des Einspritzpumpenelementes (7, 15) und des Rollenstößels (6) angeordnet sind.

9. Brennkraftmaschine nach Anspruch 8,
dadurch gekennzeichnet, daß die Wandstärke der Balken jeweils zumindest der halben Rollenstößelhöhe und der halben Einspritzpumpenelementgrundkörperhöheentspricht.

10. Brennkraftmaschine nach einem der vorherigen Ansprüche,
dadurch gekennzeichnet, daß ein Nockenwelleantriebsradsatz (3a, 3b) schwungradseitig angeordnet ist.

11. Brennkraftmaschine nach Anspruch 10,
dadurch gekennzeichnet, daß die Verzahnung des Nockenwellenantriebsradsatzes (3a, 3b) als Hochverzahnung ausgebildet ist.

12. Brennkraftmaschine nach einem der vorangegangenen Ansprüche,
***dadurch gekennzeichnet,*** daß das Einspritzventil (13) von einer Haube (23) abgedeckt ist.

13. Brennkraftmaschine nach Anspruch 12,
***dadurch gekennzeichnet****,* daß die Einspritzleitung (21) durch eine Gummiabdichtung unter die Haube (23) geführt wird.

14. Brennkraftmaschine nach einem der vorangegangenen Ansprüche,
***dadurch gekennzeichnet,*** daß zwischen dem Nocken (5b) der Nockenwelle (2) und einem Pumpenplunger (18) des Einspritzpumpenelementes (7, 15) der Rollenstößel (6), ggfs. ein Federteller (6a) und eine Plungerstößelstange (17) vorgesehen sind, deren Abmessungen so gewählt sind, daß der Flansch (32) oberhalb des Zylinderkurbelgehäuses angeordnet ist.

15. Brennkraftmaschine nach Anspruch 14,
***dadurch gekennzeichnet,*** daß der Pumpenplunger (18) und die Plungerstößelstange (17) einstückig ausgebildet sind.

## Claims

1. An internal combustion engine with a cylinder crankcase (1) in which a crankshaft is rotatably mounted, to which is pivoted at least one connecting rod, connected to a piston (10), movable in a cylinder (9) surmounted by a cylinder head (11), a camshaft (2) being provided together with an injection device with at least one injection pump element (7, 15), an injection valve (13) and an injection line (21) connecting the injection pump element (7, 15) to the injection valve (13), the camshaft (2) comprising cams (5a, 5b, 5c) for actuating the injection pump element (7, 15) separately associated with each cylinder (9), and the injection pump element (7, 15) is disposed alongside the respective cylinder (9) in the cylinder crankcase (1) and is aligned with the associated cylinder head (11) and has a roller tappet (6) which rolls on the camshaft (2) on the drive side and projects from the cylinder crankcase (1) on the high-pressure side, the high-pressure outlet (20) of the injection pump element (7, 15) being connected to the injection valve (13) via a short injection line (21) to reduce the cylinder clearance,
in which the camshaft (2) is driven by the crankshaft via a single meshing engagement and the camshaft (2) has bearing discs (4a, 4b) associated with each cylinder, separate cams (5a, 5b, 5c) for actuating the gas exchange valves and the injection pump element (7, 15) for each cylinder being disposed between the discs, **characterised in that** the cams (5a, 5b, 5c) completely fill the region between the bearing discs (4a, 4b) and form a continuous unit.

2. An internal combustion engine according to claim 1,
**characterised in that** the injection valve (13) is disposed in the cylinder head (11) at an angle to the injection pump element (7, 15).

3. An internal combustion engine according to any of the preceding claims,
**characterised in that** the injection valve (13) is offset from the cylinder axis towards the injection pump element (7, 15).

4. An internal combustion engine according to any of the preceding claims,
**characterised in that** the cylinder crankcase (1) has a sleeve (31) containing the injection pump element (7, 15), which has a flange (32) which abuts the sleeve (31).

5. An internal combustion engine according to any of the preceding claims,
**characterised in that** the injection pump element (7, 15) is formed as a solid of rotation and has an annular flange (32).

6. An internal combustion engine according to any of the preceding claims,
**characterised in that** the cylinder crankcase (1) is boxshaped in the region of the injection pump element (7, 15).

7. An internal combustion engine according to any of the preceding claims,
**characterised in that** the cylinder crankcase is made rigid, in the region of the injection pump element (7, 15) and the roller tappet (6), by means of the design and construction of the wall.

8. An internal combustion engine according to claim 6,
**characterised in that** an upper and a lower bar of the box are disposed in the region of the injection pump element (7, 15) and the roller tappet (6).

9. An internal combustion engine according to claim 8,
**characterised in that** the wall thickness of the bar is at least half the height of the roller tappet and half the height of the injection-pump element base member.

10. An internal combustion engine according to any of the preceding claims,
**characterised in that** a camshaft drive wheel set (3a, 3b) is disposed on the flywheel side.

11. An internal combustion engine according to claim 10,
**characterised in that** the teeth on the camshaft drive wheel set (3a, 3b) are high teeth.

12. An internal combustion engine according to any of the preceding claims,
**characterised in that** the injection valve (13) is covered by a hood (23).

13. An internal combustion engine according to claim 12,
**characterised in that** the injection line (21) is guided through a rubber seal under the hood (23).

14. An internal combustion engine according to any of the preceding claims,
**characterised in that** a spring washer (6a) and a plunger push rod (17) are optionally provided between the cam (5b) of the camshaft (2) and a pump plunger (18) of the injection pump element (7, 15) of the roller tappets (6), the dimensions of the spring washer and the plunger push rod being chosen so that the flange (32) is situated above the cylinder crankcase.

15. An internal combustion engine according to claim 14,
**characterised in that** the pump plunger (18) and the pump push rod (17) are in one piece.

## Revendications

1. Moteur à combustion interne dans lequel
- un carter de vilebrequin (1), reçoit à rotation un vilebrequin, sur lequel est articulée au moins une bielle, reliée à un piston (10), mobile dans un cylindre (9) recouvert par une culasse (11),
- un arbre à cames (2) ainsi qu'un dispositif d'injection avec au moins un élément de pompe d'injection (7, 15), un injecteur (13) et une canalisation d'injection (21) reliant l'élément de pompe d'injection (7, 15) et l'injecteur (13),
- l'arbre à cames (2) comporte des cames (5a, 5b, 5c) pour l'actionnement de l'élément de pompe d'injection (7, 15) associé séparément à chaque cylindre (9),
- l'élément de pompe d'injection (7, 15) est logé dans le carter de vilebrequin (1) à côté du cylindre (9) associé et orienté vers la culasse (11) associée, son côté d'entraînement roulant avec un poussoir à galet (6) sur l'arbre à cames (2) et faisant saillie du côté haute pression, hors du carter de vilebrequin (1),
- l'échappement haute pression (20) de l'élément de pompe d'injection (7, 15) est relié à l'injecteur (13) par une courte canalisation d'injection (21) pour réduire le volume nuisible,
- l'arbre à cames est entraîné à partir du vilebrequin par l'intermédiaire d'un engrènement unique, et
- l'arbre à cames (2) comporte des disques de palier (4a, 4b) associés à chaque cylindre entre lesquels sont disposées des cames (5a, 5b, 5c), distinctes pour chaque cylindre, pour l'actionnement des soupapes d'échange de gaz et de l'élément de pompe d'injection (7, 15),
caractérisé en ce que
les cames (5a, 5b, 5C) occupent complètement la zone comprise entre les disques de palier (4a, 4b) et forment un ensemble continu.

2. Moteur à combustion interne selon la revendication 1,
caractérisé en ce que
l'injecteur (13) est incliné dans la culasse (11) vers l'élément de pompe d'injection (7, 15).

3. Moteur à combustion interne selon une des précédentes revendications,
caractérisé en ce que
l'injecteur (13) est décalé à partir de l'axe du cylindre vers l'élément de pompe d'injection (7, 15).

4. Moteur à combustion interne selon une des précédentes revendications,
caractérisé en ce que
le carter de vilebrequin (1) comporte une douille (31) dans laquelle est placé l'élément de pompe d'injection (7, 15) appliqué contre la douille (31) par une bride (32).

5. Moteur à combustion interne selon une des précédentes revendications,
caractérisé en ce que
l'élément de pompe (7, 15) est un corps de révolution comportant une bride (32) de forme annulaire.

6. Moteur à combustion interne selon une des précédentes revendications,
caractérisé en ce que
le carter de vilebrequin (1) est réalisé en forme de caisson dans la zone de l'élément de pompe (7, 15).

7. Moteur à combustion interne selon une des précédentes revendications,
caractérisé en ce que
le carter de vilebrequin (1) est rigide dans la zone de l'élément de pompe d'injection (7, 15) et du poussoir à galet (6), par le choix de la configuration et de la formation de la paroi.

8. Moteur à combustion interne selon la revendication 6,
caractérisé en ce qu'
une barre supérieure et une barre inférieure du caisson sont disposées dans la zone de l'élément de pompe (7, 15) et du poussoir à galet (6).

9. Moteur à combustion interne selon la revendication 8,
caractérisé en ce que
l'épaisseur de paroi des barres correspond respectivement au moins à la demi-hauteur du poussoir à galet et à la demi-hauteur du corps de base de l'élément de pompe d'injection.

10. Moteur à combustion interne selon une des précédentes revendications,
caractérisé en ce qu'
un jeu de roues d'entraînement d'arbre à cames (3a, 3b) est disposé côté volant.

11. Moteur à combustion interne selon la revendication 10,
caractérisé en ce que
la denture du jeu de roues d'entraînement de l'arbre à cames (3a, 3b) est une denture haute.

12. Moteur à combustion interne selon une des précédentes revendications,
caractérisé en ce que
l'injecteur (13) est recouvert par un capot (23).

13. Moteur à combustion interne selon la revendication 12,
caractérisé en ce que
la canalisation d'injection (21) est guidée sous le capot (23) à travers un joint d'étanchéité en caoutchouc.

14. Moteur à combustion interne selon une des précédentes revendications,
caractérisé en ce qu'
entre la came (5b) de l'arbre à cames (2) et un piston plongeur de pompe (18) de l'élément de pompe (7, 15) il y a le poussoir à galet (6), éventuellement une coupelle de ressort (6a) et une tige de poussoir de piston plongeur (17), dont les dimensions sont choisies de façon que la bride (32) soit au-dessus du carter de vilebrequin.

15. Moteur à combustion interne selon la revendication 14,
caractérisé en ce que
le piston plongeur de pompe (18) et la tige de poussoir de piston plongeur (17) sont d'un seul tenant.
